# EUROPÄISCHE PATENTSCHRIFT

(11) **EP 1 361 117 B1**
(45) Veröffentlichungstag und Bekanntmachung des Hinweises auf die Patenterteilung: **31.10.2007**
(21) Anmeldenummer: 02010559.9
(22) Anmeldetag: 10.05.2002
(51) Int. Cl.: B60R 13/02, B64C 1/12, B60R 11/00

(54) **Vorrichtung zur lösbaren Befestigung eines ersten Teils an einem in einem Flugzeug eingebauten zweiten Teil**
Releasable fastening of a first part to a second part incorporated in an aircraft
Fixation démontable d'une première pièce sur une deuxième pièce intégrée à un avion

(43) Veröffentlichungstag der Anmeldung: 12.11.2003
(73) Patentinhaber: Goodrich Lighting Systems GmbH, 59557 Lippstadt (DE)
(72) Erfinder: Hessling, Andre, 59555 Lippstadt (DE)
(74) Vertreter: Hilleringmann, Jochen

(56) Entgegenhaltungen:
- WO-A-00/40436
- DE-A- 19 730 269
- GB-A- 2 316 707
- US-A- 4 591 204
- PATENT ABSTRACTS OF JAPAN vol. 2002, no. 07, 3. Juli 2002 (2002-07-03) & JP 2002 067856 A (INOAC CORP), 8. März 2002 (2002-03-08)

## Beschreibung

Die Erfindung betrifft eine Vorrichtung zur lösbaren Befestigung eines ersten Teils, bei dem es sich insbesondere um ein Verkleidungselement handelt, an einem in einem Fahrzeug und insbesondere in einem Flugzeug eingebauten zweiten Teil. Dieses zweite Teil weist ein L-förmiges Element und ein mit dessen kürzeren Schenkel im wesentlichen fluchtendes, von dem L-förmigen Element beabstandetes Abstützelement auf. Insbesondere handelt es sich bei dem zweiten Teil um ein C-förmiges Befestigungsprofil, das einen Basisschenkel sowie zwei Seitenschenkel aufweist, deren freie Enden aufeinander zu gerichtet sind.

In einem Flugzeug sind die über den Sitzplätzen befindlichen Verkleidungselemente bzw. Funktionstafeln (auch Passenger Service Units - PSU genannt) mittels spezieller Befestigungselemente an im Flugzeug angeordneten feststehenden C-förmigen Profilschienen befestigt. Diese Schienen weisen einen Basisschenkel auf, von dem zwei zueinander beabstandete Seitenschenkel im wesentlichen in einem Winkel von 90° und parallel zueinander abstehen. An den freien Enden der Seitenschenkel sind diese einander zugewandt umgelenkt, so dass sich insgesamt im Querschnitt eine im wesentlichen C-Struktur ergibt. Zwischen den beiden freien Schenkelenden ist die Profilschiene offen.

Befestigungselemente zum Befestigen von Verkleidungselementen und Funktionstafeln an einem zuvor beschriebenen Schienensystem sind beispielsweise aus DE-A-197 30 269.6, DE-A-100 63 035.9 und WO-A-00/40436 bekannt, wobei die WO-A die Merkmale des Oberbegriffs enthält.

Die bekannten Befestigungssysteme verwenden sämtlich Metallelemente, um nämlich eine gegen unbeabsichtigte Bewegungen in Schienenerstreckungsrichtung gesicherte Befestigung zu gewährleisten. In einem Flugzeug werden jedoch eine Vielzahl derartiger Befestigungselemente (je nach Flugzeugtyp bis zu mehr als 2.000 Stück) verwendet. Daraus ergibt sich, dass die Montage der Befestigungselemente relativ schnell und zuverlässig erfolgen sollte. Darüber hinaus spielt der Gewichtsaspekt im Flugzeug eine ganz herausragende Bedeutung.

Eine Aufgabe der Erfindung ist es, ein Befestigungssystem insbesondere in der Anwendung bei einem Flugzeug zu schaffen, das leichtgewichtig und zeitsparend ein- und ausbaubar ist.

Zur Lösung dieser Aufgabe wird mit der Erfindung gemäß den Merkmalen des Anspruchs 1 eine Vorrichtung zur lösbaren Befestigung eines ersten Teils, insbesondere eines Verkleidungselements, an einem in einem Fahrzeug, insbesondere einem Flugzeug eingebauten zweiten Teil vorgeschlagen, das ein L-förmiges Element mit einem ersten Schenkel und sowie einem von diesem im wesentlichen rechtwinklig abstehenden, mit einem freien Ende versehenen zweiten Schenkel und ein in Verlängerung des zweiten Schenkels angeordnetes, sowie vom freien Ende des zweiten Schenkels beabstandetes Abstützelement aufweist. Bei dem zweiten Teil handelt es sich insbesondere um ein C-förmiges Anbringungsprofil.

Die zur Befestigung eines ersten Teils an einem zweiten Teil vom zuvor beschriebenen Typ vorgesehene Vorrichtung ist erfindungsgemäß versehen mit
- einem Befestigungselement, das ein erstes Ende zur Anbringung an dem ersten Teil und ein zweites Ende zur Anbringung an dem zweiten Teil aufweist,
- wobei das zweite Ende des Befestigungselements versehen ist mit
   - einem Anlageabschnitt zur Anlage an dem zweiten Schenkel und dem Abstützelement des zweiten Teils,
   - einem Verriegelungsabschnitt zum Verriegeln an dem freien Ende des zweiten Schenkels des zweiten Teils, wobei der Verriegelungsabschnitt flexibel ist und unter Erzeugung einer Rückstellkraft aus einer Verriegelungsposition in eine Freigabeposition bewegbar ist,
   - einem Betätigungsabschnitt zum manuellen Bewegen des Verriegelungsabschnitts aus dessen Verriegelungsposition in dessen Freigabeposition und
   - einem Umgreifabschnitt zum Umgreifen des zweiten Teils im Übergangsbereich der beiden Schenkel.

Die erfindungsgemäße Vorrichtung weist ein Befestigungselement auf, das einstückig ausgebildet ist. Dieses Befestigungselement besteht vorzugsweise aus Kunststoff, wobei insbesondere ein thermoplastischer Kunststoff zur Anwendung kommt. Die Herstellung des Befestigungselements erfolgt beispielsweise spritzgusstechnisch.

Das Befestigungselement ist mit einem rückstellfähigen Verriegelungsabschnitt versehen, der in seiner Ruhestellung eine Verriegelungsposition einnimmt und unter Erzeugung einer Rückstellkraft insbesondere durch elastische Verformung in eine Freigabeposition bewegbar ist. Der Verriegelungsabschnitt umgreift mit einem Verriegelungsvorsprung das freie Ende des zweiten Schenkels des L-förmigen Elements des zweiten Teils, wobei auf der dem zweiten Schenkel abgewandten (Außen-)Seite des ersten Schenkels des L-förmigen Elements ein Umgreifabschnitt anliegt. Das Befestigungselement ist ferner mit einem Anlageabschnitt versehen, der sowohl an dem zweiten Schenkel des L-förmigen Elements als auch an dem Abstützelement des zweiten Teils anliegt. Damit überspannt der Anlageabschnitt den Bereich zwischen dem L-förmigen Element und dem Anlageelement des feststehenden zweiten Teils. Diese Anlage dient dem Verdrehsicherungsschutz und damit der positionsstabilen Anlage des Befestigungselements an dem zweiten Teil im Verriegelungszustand.

Um den Verriegelungsabschnitt aus seiner Verriegelungsposition in die Freigabeposition überführen zu können, weist das Befestigungselement der erfindungsgemäßen Vorrichtung einen Betätigungsabschnitt auf. Dieser Betätigungsabschnitt ist vorteilhafterweise in Verlängerung des Verriegelungsabschnitts angeordnet.

Die Handhabung des Befestigungselements der erfindungsgemäßen Vorrichtung ist denkbar einfach, da das Befestigungselement lediglich mit seinem Verriegelungsabschnitt zwischen das L-förmige Element und das Abstützelement des feststehenden zweiten Teils eingeführt werden muss, wo es nach vollständiger Einführung automatisch zu einer Verrastung mit dem zweiten Teil kommt. Diese Verrastung ist akustisch wahrnehmbar, wodurch für den Monteur eine Rückmeldung gegeben ist, dass das Befestigungselement seinen Verriegelungszustand eingenommen hat. Beim Anbringen des Befestigungselements wird das L-förmige Element beidseitig, nämlich auf der einen Seite von dem Verriegelungsabschnitt und auf der anderen Seite von dem Umgreifabschnitt eingeschlossen. Der Anlageabschnitt liegt bei vollständig eingeführtem Befestigungselement an den dem Anlageabschnitt zugewandten Seiten des L-förmigen Elements und des Abstützelements des feststehenden zweiten Teils an. Diese Anlage erfolgt zweckmäßigerweise unter (geringfügiger) elastischer Verformung des Anlageabschnitts, was vorteilhaft in Bezug auf den Ausgleich von Toleranzen und insbesondere Dickenschwankungen sowie Schieflagen des Befestigungsprofils (des zweiten Teils) ist.

In vorteilhafter Weiterbildung der Erfindung ist vorgesehen, dass der Verriegelungsabschnitt über einen Halteabschnitt mit dem Anlageabschnitt des Befestigungselements verbunden ist. Dieser Halteabschnitt ragt von dem Anlageabschnitt auf und befindet sich im montierten Zustand des Befestigungselements zwischen dem L-förmigen Element und dem Abstützelement des zweiten Teils. Der Betätigungsabschnitt ist als Verlängerung des Verriegelungsabschnitts ausgebildet und steht über den Anlageabschnitt hinaus über. Die Anbindung des Verriegelungsabschnitts am Halteabschnitt ist also von dem Anlageabschnitt beabstandet (nämlich um den Halteabschnitt). Die Verbindung zwischen Halteabschnitt und Verriegelungsabschnitt ist flexibel bzw. tordierbar ausgebildet, wodurch die den Verriegelungsabschnitt in seine Verriegelungsposition vorspannenden Rückstellkräfte erzeugt werden, wenn der Verriegelungsabschnitt in die Freigabeposition bewegt wird.

In vorteilhafter Weiterbildung der Erfindung ist ferner vorgesehen, dass der Umgreifabschnitt von dem Anlageabschnitt aufragt und dass insbesondere von dem Anlageabschnitt dem Umgreifabschnitt gegenüberliegend oder nahe dem Umgreifabschnitt ein diesem abgewandter Stegabschnitt absteht, dessen freies Ende mit dem ersten Teil verbindbar ist und insbesondere das erste Ende des Befestigungselements bildet. Der Umgreifabschnitt ist gemäß dieser Weiterbildung der Erfindung starr mit dem Anlageabschnitt verbunden. Ebenfalls starr mit dem Anlageabschnitt ist der Stegabschnitt verbunden, der die Verbindung zum ersten Teil bildet.

Vorzugsweise weist das Befestigungselement der erfindungsgemäßen Vorrichtung zwei stegartige Anlageabschnitte auf, von denen jeweils ein Umgreifabschnitt und ein Halteabschnitt absteht, wobei zwischen den beabstandeten Anlageabschnitten und Halteabschnitten der Verriegelungsabschnitt angeordnet ist, der um eine (gedachte) Schwenkachse bewegbar einstückig mit den Halteabschnitten verbunden ist. Von beiden Anlageabschnitten steht zweckmäßigerweise ein Stegabschnitt ab, wobei die parallelen Stegabschnitte untereinander teilweise verbunden sind, was die Stabilität erhöht und andererseits Material einspart.

Wie bereits oben erwähnt, zeichnet sich die erfindungsgemäße Vorrichtung durch ihren einfachen Aufbau sowie die einfache Handhabung bei der Montage und Demontage aus. Dadurch sind sowohl die Herstell- als auch Verarbeitungskosten gering. Während einem ungewollten Ablösen des Befestigungselements von dem zweiten Teil durch einen Formschluss entgegengewirkt wird (der Verriegelungsabschnitt bzw. der Rasthaken hintergreift das L-förmige Element des zweiten Teils - Hinterschnittprinzip), ist das Befestigungselement an dem zweiten Teil entlang von dessen Erstreckung lediglich durch Reibschluss gegen unbeabsichtigte Bewegungen gesichert. Dies ist insbesondere bei Flugzeugverkleidungselementen bzw. den über den Sitzplätzen angeordneten Funktionstafeln (PSU) grundsätzlich nicht zulässig, da diese Elemente gegen Bewegungen in Flugrichtung gesichert sein müssen (so genannter X-Stop). Das erfindungsgemäße Befestigungselement sollte daher bei Deckenverkleidungen eingesetzt werden, bei denen einige Verkleidungselemente mit der erfindungsgemäßen Vorrichtung und die übrigen Verkleidungselemente mit Befestigungssystem mit X-Stop befestigt sind. Damit eignet sich die erfindungsgemäße Vorrichtung insbesondere zur Befestigung der so genannten In-Fill-Panel zwischen den PSU und O₂-Panels oberhalb der Flugzeugsitzplätze. Denn je nach dem Sitzreihenabstand, dem entsprechend auch die PSU beabstandet sind, muss der Zwischenraum zwischen benachbarten PSU bzw. O₂-Panels durch ein oder mehrere gleiche oder auch unterschiedliche In-Fill-Panel ausgefüllt werden. Die PSU- und O₂-Funktionstafeln werden dabei mittels Befestigungselementen befestigt, die auch eine zuverlässige Sicherung in Flugrichtung gewährleisten. Werden nun benachbart zu den PSU- und O₂-Funktionstafeln die In-Fill-Panel mit den erfindungsgemäßen Vorrichtung festgelegt, so übernehmen die PSU- und O₂₋Funktionstafeln sozusagen die X-Stop-Funktion, weshalb die In-Fill-Panel-Befestigungen diese Funktion nicht selbst mehr notwendigerweise übernehmen müssen.

Die erfindungsgemäße Befestigung kann aber auch für z.B. ein oder zwei Befestigungsprofile der PSU- bzw. O₂-Funktionstafeln verwendet werden, wodurch die verbleibenden Befestigungsprofile dieser Funktionstafeln über X-Stop-Funktion verfügen sollten.

Die Erfindung ist selbstverständlich auf die Anwendung der Befestigung von In-Fill-Panel bei Flugzeugen nicht beschränkt. Vielmehr lassen sich mit der erfindungsgemäßen Vorrichtung grundsätzlich sämtliche Verkleidungs- oder sonstige Elemente in Fahrzeugen befestigen. Insoweit ist die Erfindung also allgemein gültig anwendbar.

Die Vorteile der erfindungsgemäßen Vorrichtung lassen sich wie folgt zusammenfassen:
- Das Befestigungselement nach der erfindungsgemäßen Vorrichtung kann als ein einziges (Spritzguss-)Teil gefertigt werden und weist keine weiteren mechanischen und insbesondere bewegbar gelagerten Komponenten auf.
- Bei Einsatz von Kunststoffen ist das Befestigungselement extrem leichtgewichtig ausführbar und preiswert herstellbar.
- Es ist bereits während der Montage durch eine akustische Rückmeldung für den Monteur erkennbar, dass das Befestigungselement mit dem zweiten Teil verriegelt ist.
- Durch einfache Manipulation des Betätigungselements (beispielsweise durch einen Schraubendreher o.dgl. manuelles Werkzeug) kann die Verriegelung gezielt aufgehoben und damit das Befestigungselement demontiert werden.
- Der selbstverriegelnde Verriegelungsmechanismus des Befestigungselements funktioniert auch bei toleranzbedingten Wanddickenabweichungen und Schiefstellungen des zweiten Teils.
- Beim Anbringen des Befestigungselements werden die Schutzoberflächen der Elemente des zweiten Teils nicht beschädigt, da der Verriegelungsabschnitt leichtgängig an dem L-förmigen Element des zweiten Teils sich entlang bewegt.
- Durch die Wahl geeigneter Kunststoff und insbesondere durch den Einsatz von Thermoplasten für das Befestigungselement (und Metallen für das zweite Teil) wird eine hohe Zuverlässigkeit und Langlebigkeit des Verriegelungsmechanismus erreicht.

Die Erfindung wird nachfolgend anhand eines Ausführungsbeispiels unter Bezugnahme auf die Zeichnung näher erläutert. Im einzelnen zeigen dabei:
- Fig. 1: einen Teilquerschnitt durch einen Flugzeugrumpf zur Verdeutlichung des Einsatzortes der erfindungsgemäßen Vorrichtung in der Flugzeugkabine,
- Fig. 2: eine perspektivische Ansicht eines Befestigungselements der erfindungsgemäßen Vorrichtung,
- Fig. 3: eine vergrößerte Detaildarstellung gemäß III der Fig. 1, in der das Befestigungselement in seiner Verriegelungsposition gezeigt ist, und
- Fig. 4: eine Situation ähnlich der gemäß Fig. 3 jedoch in demjenigen Zustand, in dem das Befestigungselement mittels eines Werkzeuges in seine Freigabeposition überführt ist.

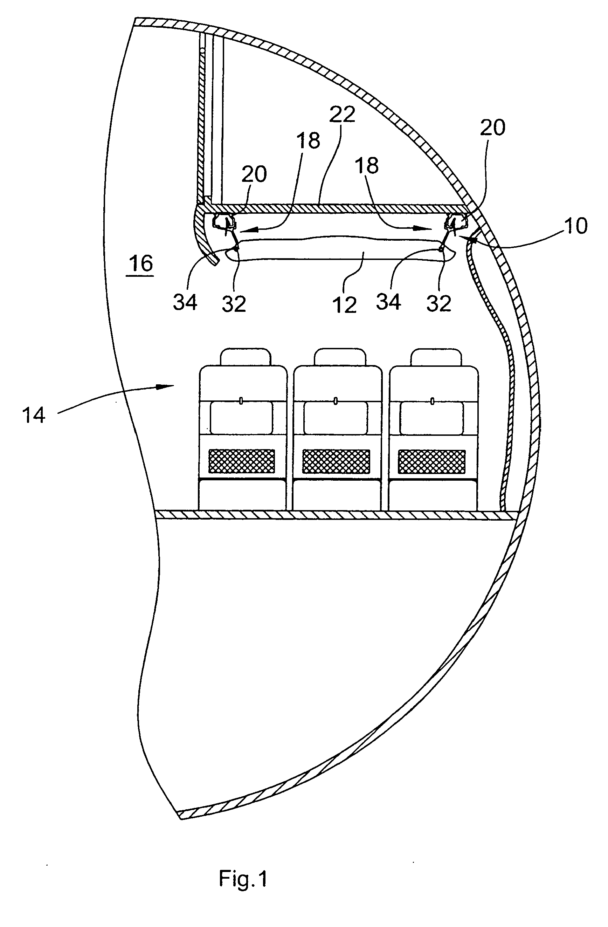

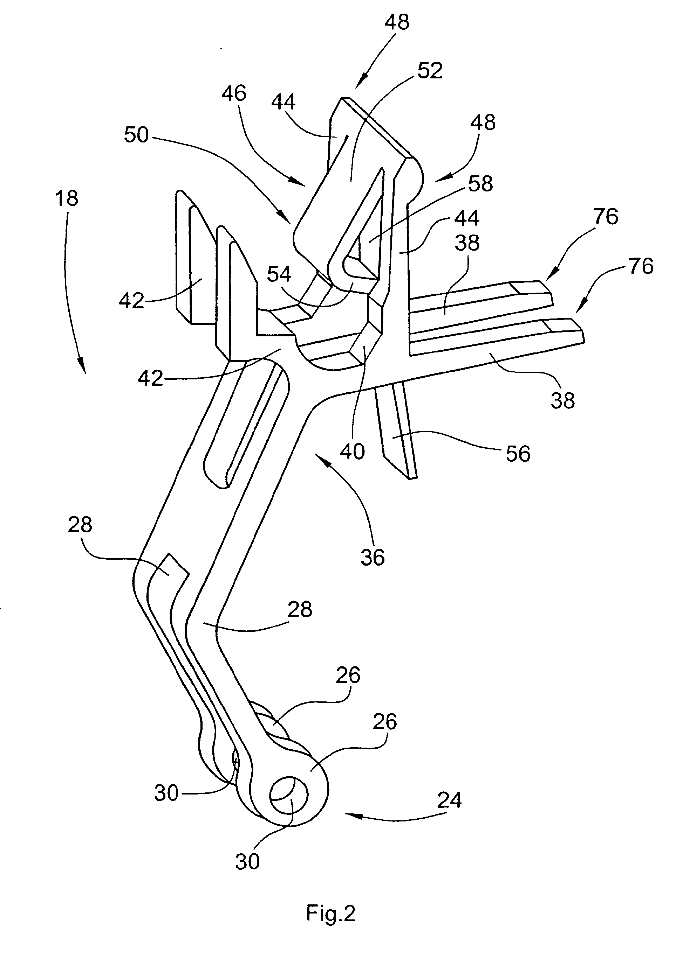

In Fig. 1 ist die Anwendung der erfindungsgemäßen Vorrichtung 10 zur Befestigung eines Verkleidungselements 12 oberhalb einer Sitzplatzreihe 14 in einer Flugzeugkabine 16 gezeigt. Zu diesem Zweck sind mehrere Befestigungselement 18 jeweils einerseits mit dem Verkleidungselement 12 verbunden und andererseits an C-förmigen Anbringungsprofilen 20 angebracht, die ihrerseits an Haltestrukturelementen 22 der Flugzeugkabine 16 fest angebracht sind. Die Konstruktion und die Wirkungsweise der Befestigungselemente 18 wird nachfolgend anhand der Fign. 2 bis 4 erläutert.

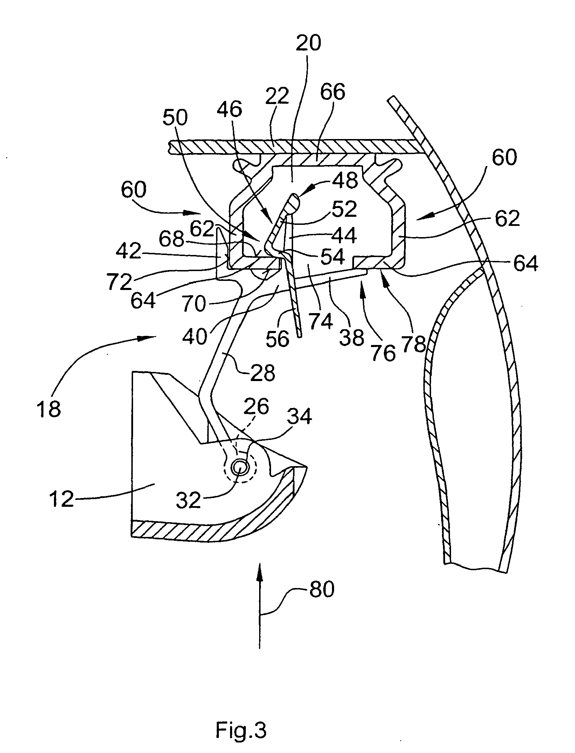

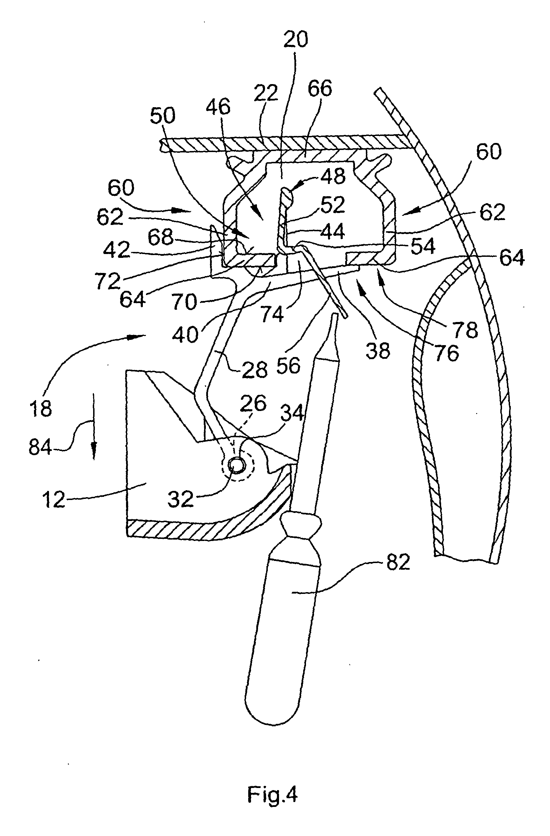

Der Aufbau eines Befestigungselements 18 ist perspektivisch in Fig. 2 wiedergegeben. Danach weist das einteilige Befestigungselement 18 ein erstes Ende 24 auf, das von den Enden 26 zweier Stegabschnitte 28 gebildet ist. Die beiden Enden 26 dieser Stegabschnitte 28 weisen miteinander fluchtende Öffnungen 30 auf, durch die sich ein Stift 32 erstreckt (siehe auch Fig. 1 und insbesondere auch Fign. 3 und 4), der auch durch fluchtende Öffnungen 34 in dem Verkleidungselement 12 verläuft.

An seinem dem ersten Ende 24 gegenüberliegenden zweiten Ende 36 weist das Befestigungselement 18 zwei sich an die Stegabschnitte 28 anschließende Anlageabschnitte 38 auf, die nach Art von Fingern ausgebildet sind. Zwischen den beiden stegförmigen Anlageabschnitten 38 und den Stegabschnitten 28 befindet sich ein Plattenabschnitt 40, von dem aus zwei Umgreifabschnitte 42 abstehen. Diese Umgreifabschnitte 42 ragen entgegengesetzt zu dem Verlauf der Stegabschnitte 28 von dem Plattenabschnitt 40 ab und stehen zu der den Anlageabschnitten 38 gegenüberliegenden Seite der Stegabschnitte 28 über.

Im Übergangsbereich zwischen dem Plattenabschnitt 40 und den Anlageabschnitten 38 ragen von beiden zwei Halteabschnitte 44 auf, die sich im wesentlichen parallel zu den Umgreifabschnitten 42 erstrecken. Die beiden ebenfalls nach Art von Armen ausgebildeten Halteabschnitte 44 halten zwischen sich einen Verriegelungsabschnitt 46, der an den den Anlageabschnitten 38 und dem Plattenabschnitt 40 abgewandten Enden 48 der Halteabschnitte 44 einstückig mit diesen verbunden ist. Der Verriegelungsabschnitt 46 weist einen Rastvorsprung 50 auf, der eine mit den Halteabschnitt-Enden 48 verbundene erste Flanke 52 und eine dazu im wesentlichen rechtwinklig verlaufende zweite Flanke 54 aufweist. Während sich diese beiden Flanken 52,54 zu einer ersten gemeinsamen Seite der beiden Halteabschnitte 44 erstrecken, schließt sich an die zweite Flanke 54 auf der anderen Seite der Halteabschnitte 44 ein nach Art einer Lasche ausgebildeter Betätigungsabschnitt 56 an, der sich zwischen den beiden Anlageabschnitten 38 erstreckt und von diesen zum ersten Ende 24 des Befestigungselements 18 übersteht.

Das gesamte Befestigungselement 18 gemäß Fig. 2 ist aus thermoplastischen Kunststoff und einteilig, beispielsweise in Spritzgusstechnik hergestellt. Auf Grund der Materialwahl ist der Verriegelungsabschnitt 46 flexibel mit den Halteabschnitten 44 verbunden. In Fig. 2 erstreckt sich der Rastvorsprung 50 des Verriegelungsabschnitts 46 durch eine sich zwischen den Halteabschnitten 44 bildende Öffnung 58 in Richtung auf die Umgreifabschnitte 42. Dies ist die Ruheposition des Befestigungselements 18, die gleichzeitig auch Verriegelungsposition ist, was nachfolgend noch anhand der Fign. 3 und 4 erläutert wird. Durch Bewegen des Betätigungsabschnitts 56 von den Stegabschnitten 28 weg lässt sich der Rastvorsprung 50 zu den Halteabschnitten 44 und damit durch die Öffnung 58 hindurch bewegen, und zwar bis in die Freigabeposition (siehe Fig. 4).
Das Zusammenwirken der Befestigungselemente 18 mit dem C-förmigen Anbringungsprofil 20 wird nachfolgend anhand der Fign. 3 und 4 erläutert. Das Anbringungsprofil 20 besteht beispielsweise aus Metall und weist zwei L-förmige Elemente 60 auf, die jeweils einen ersten Schenkel 62 und einen im wesentlichen rechtwinklig dazu verlaufenden kürzeren zweiten Schenkel 64 umfassen. Die beiden L-förmigen Elemente 60 sind mittels eines Basisschenkels 66 einstückig miteinander verbunden. Insgesamt ergibt sich somit das C-förmige Anbringungsprofil 20.

An diesem Anbringungsprofil 20 sind nun gemäß Fig. 3 die Befestigungselemente 18 verrastet. Zu erkennen ist, dass die Umgreifabschnitte 42 und der Verriegelungsabschnitt 46 das eine der beiden L-förmige Element 60 beidseitig umgreifen, wobei der Rastvorsprung 50 auf der Innenseite 68 des zweiten Schenkels 64 aufliegt. An der Außenseite 70 dieses zweiten Schenkels 64 liegen die Umgreifabschnitte 42 an, die darüber hinaus auch an der Außenseite 72 des ersten Schenkels 62 des betreffenden L-förmigen Elements 60 anliegen. Die Anlageabschnitte 38 überspannen die Öffnung 74 zwischen den zweiten Schenkeln 64 der beiden L-förmigen Elemente 60 und stützen sich an ihren freien Enden 76 an der Außenseite des zweiten Schenkels 64 des nicht von den Umgreifabschnitten 42 und dem Verriegelungsabschnitt 46 umgriffenen L-förmigen Elements 60. Dieser Schenkel 64 fungiert somit als Abstützelement 78 für die Anlageabschnitte 38.

Durch Einschieben der Befestigungselemente 18 in Richtung des Pfeils 80 der Fig. 3 gelangen die Rastvorsprünge 50 automatisch in die in Fig. 3 gezeigte Verriegelungsposition. In der ersten Phase des Einschubvorgangs wird der Rastvorsprung 50 über die Flanke 52, die das freie Ende des Schenkels 64 des L-förmigen Elements 60 kontaktiert, in die Freigabeposition bewegt, bis sich die erste Flanke 52 des Rastvorsprungs 50 über den ersten Schenkel 64 hinaus bewegt hat. Auf Grund der Rückstellkraft schnappt der Rastvorsprung 50 danach selbsttätig in seine in Fig. 3 gezeigte Verriegelungsposition zurück, wodurch das Befestigungselement 18 unter Erzeugung eines Einschnappgeräusches einrastet.

Mittels eines Werkzeuges wie beispielsweise eines Schraubendrehers 82 lässt sich nun der Rastvorsprung 50 ausgehend von der Situation gemäß Fig. 3 in seine Freigabeposition überführen. Dies ist in Fig. 4 gezeigt. Mittels des Schraubendrehers 82 wird der Betätigungsabschnitt 56 in Richtung auf die freien Enden 76 der Anlageabschnitte 38 und damit in Richtung auf dasjenige L-förmige Element 60 bewegt, das nicht von dem Verriegelungsabschnitt 46 und den Umgreifabschnitten 42 umgriffen ist. In Fig. 4 ist gezeigt, wie auf diese Weise der Rastvorsprung 50 außer Eingriff mit dem zweiten Schenkel 64 des in Fig. 4 linken L-förmigen Elements 60 des C-förmigen Anbringungsprofils 20 bewegbar ist. In diesem Zustand kann nun das Befestigungselement 18 bzw. das Verkleidungselement 12 in Richtung des Pfeils 84 aus dem C-förmigen Anbringungsprofil 20 herausbewegt werden.

## Patentansprüche

1. Vorrichtung zur lösbaren Befestigung eines ersten Teils, insbesondere eines Verkleidungselements, an einem in einem Fahrzeug, insbesondere einem Flugzeug, eingebauten zweiten Teil, das ein L-förmiges Element (60) mit einem ersten Schenkel (62) sowie einem von diesem im wesentlichen rechtwinklig abstehenden, mit einem freien Ende versehenen zweiten Schenkel (64) und ein in Verlängerung des zweiten Schenkels (64) angeordnetes, vom freien Ende des zweiten Schenkels (64) beabstandetes Abstützelement (78) aufweist, wobei das zweite Teil insbesondere als C-förmiges Anbringungsprofil (20) ausgebildet ist, **dadurch gekennzeichnet, dass** die Vorrichtung versehen ist mit
- einem Befestigungselement (18), das ein erstes Ende (24) zur Anbringung an dem ersten Teil und ein zweites Ende (36) zur Anbringung an dem zweiten Teil aufweist,
- wobei das zweite Ende (36) des Befestigungselements (18) versehen ist mit
- einem Anlageabschnitt (38) zur Anlage an dem zweiten Schenkel (64) und dem Abstützelement (78) des zweiten Teils,
- einem Verriegelungsabschnitt (46) zum Verriegeln an dem freien Ende des zweiten Schenkels (64) des zweiten Teils, wobei der Verriegelungsabschnitt (46) flexibel ist und unter Erzeugung einer Rückstellkraft aus einer Verriegelungsposition in eine Freigabeposition bewegbar ist,
- einem Betätigungsabschnitt (56) zum manuellen Bewegen des Verriegelungsabschnitts (46) aus dessen Verriegelungsposition in dessen Freigabeposition und
- einem Umgreifabschnitt (42) zum Umgreifen des zweiten Teils im Übergangsbereich der beiden Schenkel (62,64).

2. Vorrichtung nach Anspruch 1, **dadurch gekennzeichnet, dass** der Verriegelungsabschnitt (46) von einem Halteabschnitt (44) gehalten ist, der von dem Anlageabschnitt (38) aufragt, und dass der Betätigungsabschnitt (56) als Verlängerung des Verriegelungsabschnitts (46) ausgebildet ist und zu der dem Halteabschnitt (44) abgewandten Seite über den Anlageabschnitt (38) hinaus übersteht.

3. Vorrichtung nach Anspruch 1 oder 2, **dadurch gekennzeichnet, dass** der Umgreifabschnitt (42) von dem Anlageabschnitt (38) aufragt.

4. Vorrichtung nach einem der Ansprüche 1 bis 3, **dadurch gekennzeichnet, dass** von dem Anlageabschnitt (38) nahe dem Umgreifabschnitt (42) ein diesem abgewandter Stegabschnitt (28) absteht, dessen freies Ende (26) das erste Ende (24) des Befestigungselements (18) bildet.

5. Vorrichtung nach einem der Ansprüche 1 bis 4, **dadurch gekennzeichnet, dass** zwei stegartige Anlageabschnitte (38) mit jeweils einem aufragenden Umgreifabschnitt (42) sowie einem aufragenden Halteabschnitt (44) vorgesehen sind und dass der Verriegelungsabschnitt (46) zwischen den beiden Halteabschnitten (44) angeordnet und mit diesen flexibel verbunden ist.

6. Vorrichtung nach Anspruch 4 und 5, **dadurch gekennzeichnet, dass** von jedem Anlageabschnitt (38) ein Stegabschnitt (28) absteht.

7. Vorrichtung nach Anspruch 6, **dadurch gekennzeichnet, dass** der Verriegelungsabschnitt (46) einen Rastvorsprung (50) mit einer in einem spitzen Winkel zum Halteabschnitt (44) verlaufenden ersten Flanke (52) und einer winklig zu dieser verlaufenden zweiten Flanke (54) aufweist und das sich der Betätigungsabschnitt (56) winklig an die zweite Flanke (54) des Rastvorsprungs (50) anschließt.

8. Vorrichtung nach einem der Ansprüche 1 bis 7, **dadurch gekennzeichnet, dass** das Befestigungselement (18) insbesondere thermoplastischen Kunststoff aufweist.

## Claims

1. A device for removably fastening a first part, particularly a covering element, to a second part installed in a vehicle and particularly in an airplane and comprising an L-shaped element (60) including a first leg (62) and a second leg (64) extending therefrom substantially at a right angle and having a free end, and further comprising a support element (78) arranged in the extension of the second leg (64) and at a distance from the free end of the second leg (64), the second part being in particular formed as a C-shaped mounting profile (20),
**characterized in that** the device comprises:
- a fastening element (18) having a first end (24) for attachment to the first part and a second end (36) for attachment to the second part,
- wherein the second end (36) of the fastening element (18) is provided with
- an abutment portion (38) for abutment on the second leg (64) and the support element (78) of the second part,
- a locking portion (46) to be locked to the free end of the second leg (64) of the second part, the locking portion (46) being flexible and adapted to be moved from a locking position into a release position, thereby generating a restoring force,
- an actuating portion (56) for manually moving the locking portion (46) from the locking position to the release position thereof, and
- a grip-around portion (42) for gripping around the second part in the transition region of the two legs (62,64).

2. The device according to claim 1, **characterized in that** the locking portion (46) is held by a holding portion (44) arranged to extend from the abutment portion (38), and that the actuating portion (56) is formed as an extension of the locking portion (46) and projects beyond the abutment portion (38) on the side facing away from the holding portion (44).

3. The device according to claim 1 or 2, **characterized in that** the grip-around portion (42) extends from the abutment portion (38).

4. The device according to any one of claims 1 to 3, **characterized in that** the abutment portion (38) near the grip-around portion (42) has a web portion (28) extending therefrom, the web portion (28) facing away from the grip-around portion (42) and having its free end (26) forming the first end (24) of the fastening element (18).

5. The device according to any one of claims 1 to 4, **characterized in that** two web-like abutment portions (38) with at least one projecting grip-around portion (42) and a projecting holding portion (44) are provided, and that the locking portion (46) is arranged between the two holding portions (44) and is flexibly connected thereto.

6. The device according to claims 4 and 5, **characterized in that** each abutment portion (38) has a web portion (28) extending therefrom.

7. The device according to claim 6, **characterized in that** the locking portion (46) comprises a locking projection (50) having a first flank face (52) arranged at an acute angle to the holding portion (44), and a second flank face (54) arranged at an angle to the first flank face (52), and that the actuating portion (56) angularly joins the second flank face (54) of the locking projection (50).

8. The device according to any one of claims 1 to 7, **characterized in that** the fastening element (18) comprises synthetic material, particularly thermoplastic synthetic material.

## Revendications

1. Dispositif pour la fixation amovible d'une première pièce, en particulier un élément d'habillage, à une deuxième pièce montée dans un véhicule, en particulier un avion, qui présente un élément en forme de L (60) avec une première branche (62) ainsi qu'une deuxième branche (64) s'écartant de celle-ci pour l'essentiel à angle droit et munie d'une extrémité libre, et un élément d'appui (78) disposé dans la prolongation de la deuxième branche (64) et distancé de l'extrémité libre de la deuxième branche (64), la deuxième pièce étant en particulier un profilé de montage (20 en forme de C, le dispositif comprenant
- un élément de fixation (18) qui présente une première extrémité (24) pour le montage à la première pièce et une deuxième extrémité (36) pour le montage à la deuxième pièce,
- la deuxième extrémité (36) de l'élément de fixation (18) étant munie
- d'un segment d'application (38) pour l'application contre la deuxième branche (64) et l'élément d'appui (78) de la deuxième pièce,
- d'un segment de verrouillage (46) pour le verrouillage sur l'extrémité libre de la deuxième branche (64) de la deuxième pièce, le segment de verrouillage (46) étant flexible et pouvant être déplacé d'une position de verrouillage dans une position de dégagement en générant une force de rappel,
- d'un segment d'actionnement (56) pour le déplacement manuel du segment de verrouillage (46) de sa position de verrouillage dans sa position de dégagement, et
- d'un segment d'entourage (42) pour entourer la deuxième pièce dans la zone de liaison des deux branches (62, 64).

2. Dispositif selon la revendication 1, **caractérisé en ce que** le segment de verrouillage (46) est tenu par un segment de retenue (44) qui saille du segment d'application (38) vers le haut, et le segment d'actionnement (56) est formé dans le prolongement du segment de verrouillage (46) et dépasse du segment d'application (38) vers le côté opposé au segment de retenue (44).

3. Dispositif selon la revendication 1 ou 2, **caractérisé en ce que** le segment d'entourage (42) saille du segment d'application (38) vers le haut.

4. Dispositif selon l'une quelconque des revendications 1 à 3, **caractérisé en ce qu'**un segment d'entretoise (28) saille du segment d'application (38) à proximité du segment d'entourage (42) opposé à celui-ci, dont l'extrémité libre (26) forme la première extrémité (24) de l'élément de fixation (18).

5. Dispositif selon l'une quelconque des revendications 1 à 4, **caractérisé en ce que** deux segments d'application (38) en forme de barrette avec respectivement un segment d'entourage (42) saillant vers le haut et un segment de retenue (44) saillant vers le haut sont prévus, et le segment de verrouillage (46) est disposé entre les deux segments de retenue (44) et relié à ceux-ci de manière flexible.

6. Dispositif selon les revendications 4 et 5, **caractérisé en ce qu'**un segment d'entretoise (28) saille de chaque segment d'application (38).

7. Dispositif selon la revendication 6, **caractérisé en ce que** le segment de verrouillage (46) présente une saillie d'arrêt (50) avec un premier flanc (52) s'étendant dans un angle aigu par rapport au segment de retenue (44) et un deuxième flanc (54) s'étendant de manière angulaire par rapport au premier, et le segment d'actionnement (56) prolonge de manière angulaire le deuxième flanc (54) de la saillie d'arrêt (50).

8. Dispositif selon l'une quelconque des revendications 1 à 7, **caractérisé en ce que** l'élément de fixation (18) présente une matière plastique en particulier thermoplastique.
